# EUROPÄISCHE PATENTSCHRIFT

(11) **EP 0 662 106 B1**
(45) Veröffentlichungstag und Bekanntmachung des Hinweises auf die Patenterteilung: **27.08.1997**
(21) Anmeldenummer: 94918268.7
(22) Anmeldetag: 28.06.1994
(51) Int. Cl.: C08L 13/00, C08C 19/36, C08G 18/68, C08G 18/69

(54) **EINKOMPONENTIGE, BEI RAUMTEMPERATUR LAGERSTABILE, WÄRMEHÄRTENDE MASSEN AUS ANHYDRIDGRUPPENHALTIGEN POLYMEREN UND PULVERFÖRMIGEN VERNETZUNGSMITTELN, VERFAHREN ZU IHRER HERSTELLUNG UND IHRE VERWENDUNG**
SINGLE-COMPONENT THERMOSETTING MASSES, STORAGE STABLE AT ROOM TEMPERATURE, MADE OF ANHYDRIDE GROUP-CONTAINING POLYMERS AND POWDERY CROSS-LINKING AGENTS, PROCESS FOR PRODUCING THE SAME AND THEIR USE
SUBSTANCES A UN CONSTITUANT THERMODURCISSABLES, STABLES AU STOCKAGE A TEMPERATURE AMBIANTE, COMPOSEES DE POLYMERES CONTENANT DES GROUPES ANHYDRIDE ET DE RETICULANTS PULVERULENTS, LEUR PROCEDE DE PREPARATION ET LEUR UTILISATION

(30) Priorität: 16.07.1993 CH 2145/93
(43) Veröffentlichungstag der Anmeldung: 12.07.1995
(73) Patentinhaber: Ciba Specialty Chemicals Holding Inc., 4057 Basel (CH)
(72) Erfinder: Abend, Thomas P., 9010 St. Gallen (CH)
(86) Internationale Anmeldenummer: CH9400136
(87) Internationale Veröffentlichungsnummer: WO9502637

(56) Entgegenhaltungen:
- EP-A- 0 049 098
- EP-A- 0 559 515
- DE-A- 2 758 222
- DE-A- 3 436 556
- FR-A- 2 235 974
- GB-A- 994 907
- US-A- 4 145 321

## Beschreibung

Die Erfindung betrifft flüssige, bei Raumtemperatur lagerstabile, wärmehärtende Massen gemäss Oberbegriff von Patentanspruch 1, Verfahren zu ihrer Herstellung und ihre Verwendung.

Heisshärtende, einkomponentige Massen zum Verkleben, Abdichten, Beschichten und Vergiessen werden heute in grossem Umfang in der Industrie angewendet. Diese Massen werden bei Raumtemperatur in flüssiger Phase appliziert und vernetzen unter Einwirkung von Wärme bei erhöhter Temperatur. Industrielle Bedeutung haben vor allem nieder- bis hochviskose Gemische auf der Basis von Isocyanaten, Isocyanatprepolymeren, Epoxyden, niedermolekularen Acrylaten, peroxyd- und monomer-haltigen Polyestern, und schwefel- oder peroxydhaltigen niedermolekularen Elastomeren. Gegen die meisten dieser Gemische, welche niedermolekulare und bei Einbrenntemperaturen flüchtige Reaktionspartner verwenden, bestehen heutzutage aus verschiedenen Gründen grosse Vorbehalte, sei es wegen ihrer akuten oder chronischen Giftigkeit, Oekotoxizität, oder wegen ihrer Allergien auslösenden Wirkung.

Es besteht daher ein grosser Bedarf an toxikologisch unbedenklichen, heisshärtenden Massen für das Vergiessen, Dichten, Kleben und Beschichten. Da solche Massen auch für grosstechnische Anwendungen gebraucht werden, kommen nur Reaktionssysteme in Frage, welche allgemein verfügbare, industriell herstellbare Ausgangsstoffe verwenden und zu ihrer Herstellung einfache Verfahrensschritte benötigen.

Es wurden schon grosse Anstrengungen unternommen, elastische Massen basierend auf anhydridgruppenhaltigen Polymeren und verschiedenen Vernetzungsmitteln als technisch brauchbare Bindemittel zu entwickeln.

In der DE 2 205 209 wurden Gemische von Diels-Alder Addukten von kurzkettigen Diolefinen und Maleinsäureanhydrid an endständige Hydroxylgrupppen des Polybutadiens beschrieben, welche bei erhöhter Temperatur zur Umsetzung gebracht wurden. Das Gemisch aller Komponenten erwies sich aber bei Raumtemperatur als nicht lagerstabil, vor allem in katalysiertem Zustand.

Die in der DE 3 436 556 beschriebenen Massen auf Basis von anhydridgruppenhaltigen Polybutadienen und hydroxylendgruppen-haltigen Polybutadienen, sind wohl im unkatalysierten Zustand bei Raumtemperatur stabil, brauchen aber bei höherer Temperatur sehr lange Härtezeiten und führen zu Produkten mit sehr unbefriedigenden mechanischen Eigenschaften.

In der DE 3 830 895 wurde die Härtung von maleinisiertem Polybutadien mit flüssigen Polyolen beschrieben, die bereits bei Raumtemperatur abläuft, ohne den Hinweis auf bei Raumtemperatur lagerstabile, heisshärtende Gemische unter Verwendung von pulverförmigen Polyolen.

In der DE 2 758 222 wird die Heisshärtung eines Gemisches von maleinisiertem Polybutadien mit einem Komplex von 4,4'-Methylendianilin und Natriumchlorid beschrieben. Nachteilig ist die Anwesenheit von Natriumchlorid im Endprodukt und die mutagene Wirkung von Methylendianilin im unreagierten Gemisch.

In der DE 3 913 407 wird ein Copolymer beschrieben, das neben Anhydridgruppen noch Hydroxyl- und Epoxygruppen enthält und bei Temperaturen über 140 °C eingebrannt werden kann. Die Reaktionstemperatur kann wohl durch Katalysatorbeigabe erniedrigt werden, doch verliert man so die Lagerstabilität bei Raumtemperatur. Aus der Anmeldung geht hervor, dass die beschriebenen hochmolekularen Copolymeren nur aus Lösung verarbeitbar sind.

Es war die der Erfindung zugrunde liegende Aufgabe, bei Raumbedingungen lagerstabile, neue, einkomponentige, bei erhöhten Temperaturen vernetzende Massen bereitzustellen, welche die Nachteile des Standes der Technik nicht aufweisen. Diese Aufgabe wird durch die Massen gemäss Anspruch 1 und das Verfahren zu ihrer Herstellung gemäss Anspruch 18 gelöst.

Gegenstand der Erfindung sind demnach bei Raumtemperatur lagerfähige, bei erhöhter Temperatur durch Wärmeeinfluss vernetzende Massen bevorzugt aus
a) anhydridgruppenhaltigen Polymeren
   und
b) in diesen Polymeren dispergierten festen, pulverförmigen, mehrfunktionellen anhydridreaktiven Vernetzungsmitteln.

Diese Vernetzungsmittel sind bei Raumbedingungen inaktiv, das heisst nicht im Polymeren gelöst. Sie sind in der Lage, bei erhöhten Temperaturen in geschmolzenen, gelösten und gegebenenfalls aktivierten Zustand mit den Anhydridgruppen des Polymeren unter Vernetzung zu reagieren.

Polymere a), die als Bindemittel die Basis dieser Massen bilden, sind bei Raumtemperatur flüssige säureanhydridgruppenhaltige Polymere oder Copolymere und mit Molekulargewichten von 500 bis 50 000. Bevorzugt sind Polymere mit einem Molekulargewicht von 2000 bis 30 000, die im Mittel 1.5 bis 10, bevorzugt 1.8 bis 8 Anhydridgruppen pro Molekül enthalten.

Als Säurezahl ausgedrückt weisen diese Polymeren einen Wert von 15 bis 150 mg KOH/g, bevorzugt 20 bis 100 mg KOH/g auf (bestimmt mit wasserfreier, alkoholischer Kaliumhydroxydlösung, welche zu einem Halbester führt).

Die Säureanhydridgruppen können statistisch oder regelmässig über das Molekül verteilt sein oder in endständiger Position. Die Einführung der Säureanhydridgruppen kann durch Copolymerisation, durch Umsetzung mit endständigen reaktiven Gruppen, durch nachfolgende Addition von ungesättigten Anhydriden an einzelne oder konjugierte Doppelbindungen, oder durch Graftreaktionen erfolgen.

Beispiele von solchen vernetzbaren Polymeren a) sind Copolymere mit olefinisch ungesättigten Monomeren, wie zum Beispiel Copolymere von Maleinsäure- oder Itaconsäureanhydrid mit Olefinen, Dienen, Vinylverbindungen, vinylaromatischen Verbindungen, Vinylestern, Vinylethern, Acryl- und Methacrylverbindungen,

Additionsprodukte von ungesättigten Anhydriden an einzelne oder konjugierte Doppelbindungen sind bevorzugt solche an Polymere des Butadiens, Isoprens, an Copolymere des Butadiens oder Isoprens mit Cyclopentadien, Styrol, Acrylnitril, Olefine mit bis zu 12 C-Atomen, an Ester ungesättigter Fettsäuren, an Terpene, oder an flüssige, ungesättigte Abbauprodukte von hochmolekularen Elastomeren, wie Naturkautschuk, Styrol-Butadienkautschuk, SBS- und SIS-Thermoplastischer-Kautschuk. Besonders bevorzugt sind Addukte von Maleinsäureanhydrid an Polymere oder Copolymere des Polybutadiens. Die Addition des ungesättigten Anhydrids kann auch an partiell hydrierte Polymere erfolgen, respektive die Hydrierung überschüssiger Doppelbindungen kann katalytisch nach der Anhydridaddition vorgenommen werden.

Graftprodukte, die durch Addition von olefinisch ungesättigten Anhydriden an flüssige Polymere und Copolymere erhalten werden, meist unter Einwirkung von Radikalgebern, wie Peroxyden und Azoverbindungen. Besonders bevorzugt ist die Addition von ungesättigten Anhydriden an EPDM, EVA und Polyalpha-olefine.

Bevorzugte flüssige säureanhydridgruppenhaltige Polymere sind auch Esteranhydride, insbesondere polymere Esteranhydride, Thioesteranhydride oder Amidanhydride von Polyhydroxylverbindungen, Polymercaptoverbindungen, von Polyaminen, mit Trimellithsäureanhydrid, Pyromellithsäuredianhydrid, Benzoltetracarbonsäuredianhydrid, Benzophenontetracarbonsäuredianhydrid.

In vorteilhafter Weise können die Bindemittel auch Gemische der vernetzbaren Polymeren sein. Es kann von Vorteil sein, wenn die Gemische aus anhydridhaltigen Polymeren mit verschiedenem mittleren Molekulargewicht und gegebenenfalls mit unterschiedlicher Anzahl Anhydridgruppen pro Molekül bestehen. Alternativ können die Gemische aus polyfunktionellen, anhydridgruppenhaltigen Polymeren mit monofunktionellen anhydridgruppenhaltigen Polymeren bestehen, speziell mit niedermolekularen, monofunktionellen anhydridgruppenhaltigen Polymeren. Die Gemische enthalten im Mittel bevorzugt mindestens 1.5 Anhydridgruppen pro Molekül.

Die bevorzugten flüssigen Polymere können neben Anhydridgruppen noch andere funktionelle Gruppen enthalten, zum Beispiel Alkoxysilylgruppen oder Carboxylgruppen.

Vertreter der erfindungsgemässen pulverförmigen Vernetzungsmittel b) umfassen
b1) feste Di- oder Polyole mit primären oder sekundären Hydroxylgruppen
b2) feste Di- oder Polyamine,
b3) feste Di- oder Polyepoxyde,
b4) Verbindungen, welche verschiedene anhydridreaktive Gruppen tragen,
b5) und deren Gemische,
insbesondere mit Schmelzpunkt über 60 °C, bevorzugt über 80 °C, besonders bevorzugt über 100 °C, gegebenenfalls nach oberflächlicher Desaktivierung der anhydrid-reaktiven Gruppen des festen vernetzungsmittels mit acylierenden oder alkylierenden Verbindungen. Damit soll sichergestellt sein, dass die Vernetzungsmittel erst bei Temperaturen ab 80 °C mit dem Bindemittel reagieren können.

Die Korngrösse der Vernetzungsmittel liegt im Bereich von 0 bis 500 µm, bevorzugt bis 200 µm, ganz besonders bevorzugt im Bereich bis 100 µm.

Diese Vernetzungsmittel sind bei Raumbedingungen inaktiv und nicht im Polymeren löslich. Bei erhöhten Temperaturen schmelzen sie, oder lösen sich auf, und reagieren mit den Anhydridgruppen des Polymeren.

Beispiele von festen Di- oder Polyhydroxyverbindungen bl), welche primäre oder sekundäre Hydroxylgruppen enthalten und bei Temperaturen über 60 °C schmelzen, sind Mannit, Sorbit, Sucrose, Lactose, Erythrit, Pentaerythrit, Di-Pentaerythrit, Tri-pentaerythrit, partiell veresterte oder verätherte feste Pentaerythritderivate (mit im Mittel wenigstens 2 freien Hydroxylgruppen), Neopentylglykol, Bis-(2-hydroxyethyl)hydrochinon, oxethyliertes Bisphenol A, Terephthalsäure-bis-oxethylamid, Tris-(2-hydroxyethyl)isocyanurat, N,N'-Bis-(2-hydroxy-ethyl)-piperazin, feste, hydroxylgruppenhaltige Polyester oder Addukte von Di- oder Polyisocyanaten mit kurzkettigen Diolen oder Aminoalkoholen, feste, hydroxylgruppenhaltige Polymere oder Copolymere, wie partiell hydrolysiertes Co-Ethylenvinylacetat, Copolymere von (Meth)acrylsäureestern mit Hydroxyethyl- oder Hydroxypropyl(meth)acrylat, veresterte oder verätherte Cellulose, teilhydrolysiertes Polyvinylacetat (acetylgruppenhaltiger Polyvinylalkkohol), hydroxylgruppenhaltiges Polyvinylacetal, hydroxylgruppenhaltiges PVC-Copolymer,

Beispiele fester, erfindungsgemäss verwendbarer Di- oder Polyamine b2) welche bei Temperaturen über 60 °C schmelzen, sind sterisch gehinderte, aromatische Diamine, wie 3,3',5,5'-Tetramethyl-4,4'-diaminodiphenylmethan, 3,3',5,5'-Tetraethyl-4,4'-diaminodiphenylmethan, 2,2'-Dichloro-3,3',5,5'-Tetraethyl-4,4'-diaminodiphenylmethan, Ethylenglykol-di-p-aminobenzoesäureester, Trimethylenglykol-di-p-aminobenzosäureester, 4,4'-Diaminobenzophenon, 4,4'-Diaminobenzanilid, 3,3'-und 4,4'-Diaminodiphenylsulfon, N,N'-Di-anilino-harnstoff, Piperazin,
feste Addukte von kurzkettigen Diaminen an Diisocyanate oder Polyisocyanate,
feste Addukte von kurzkettigen Mono- und Diaminen an Diepoxyde oder Polyepoxyde,
feste Reaktionsprodukte von monomeren Anhydriden und Polyaminen (innere Salze), wie das Produkt aus der Umsetzung von Phthalsäureanhydrid und Diethylentriamin (Epoxyhärter HT 939 der Ciba-Geigy AG), feste Neutralisationsprodukte aus Dioder Polyaminen und aliphatischen Monocarbonsäuren.

Die vorerwähnten, festen Addukte von Di- oder Polyaminen an Isocyanate, Epoxyde oder Monoanhydride, respektive die Neutralisationsprodukte der Di- oder Polyamine mit aliphatischen Monocarbonsäuren, können auch in situ in einem Weichmacher oder nichtreaktiven Lösungsmittel vor dem Vermischen mit den anhydridgruppenhaltigen Polymeren als Zwischenprodukt erzeugt werden.

Beispiele von festen, über 60 °C schmelzenden epoyxdhaltigen Verbindungen b3) sind Tris-glycidyl-isocyanurat, N,N,N',N'-tetraglycidylether des 4,4'-Diaminodiphenyl-methans, feste epoxydgruppenhaltige Kondensate auf Basis Bisphenol-A-diglycidylether

Beispiele von festen, über 60 °C schmelzenden Verbindungen b4), welche in den Molekülen unterschiedliche, anhydridreaktive Gruppen wie Amino- und Hydroxylgruppen, oder Epoxyd- und Hydroxylgruppen enthalten, sind hydroxylgruppenhaltige Kondensate des Bisphenol-A-diglycidylether oder Addukte von primären Aminen an Bisphenol-A-diglycidylether.
b5) Gemische der genannten festen, pulverförmigen, anhydrid-reaktiven Vernetzungsmittel. In besonders vorteilhafter Weise enthalten die Gemische mindestens 2 Vernetzungsmittel mit unterschiedlichen Reaktivitäten. Dabei sind auch maximal 49 Equivalentprozente mindestens eines monofunktionellen Vernetzungsmittels bevorzugt.

Die Vernetzungsmittel oder Gemische derselben weisen vorteilhaft eine Funktionalität von 1.5 bis 6, bevorzugt von 2 bis 4 auf. In den erfindungsgemässen Mischungen beträgt das stöchiometrische Verhältnis von Anhydridgruppen zu den genannten anhydridreaktiven Gruppen, das heisst zu den Hydroxy-, Aminooder Epoxydgruppen, vorteilhaft 5 zu 1 bis 0.2 zu 1, bevorzugt 3 zu 1 bis 0.3 zu 1.

Die Stabilität der erfindungsgemässen Massen im unvernetzten Zustand ist in vorteilhafterweise erhöht, wenn die Masse Vernetzungsmittel enthält, deren reaktive Gruppen, welche sich an der Oberfläche der dispergierten, festen, anhydridreaktiven Vernetzungsmittel befinden, desaktiviert sind. Je nach dem mittleren Teilchendurchmesser und der Korngrössenverteilung der pulverförmigen Vernetzungsmittel sind vorteilhaft 0.1 bis 15, bevorzugt 0.5 bis 10 Equivalentprozente der ursprünglich vorhandenen reaktiven Gruppen des Vernetzungsmittels desaktiviert.

Die Oberflächendesaktivierung erfolgt mit Vorteil in einer Suspension des Vernetzungsmittels in einem Weichmacher oder nichtreaktiven Lösungsmittel.

Feste Di- oder Polyole mit primären oder sekundären Hydroxylgruppen sind oberflächendesaktiviert durch Umsetzung mit
- aliphatischen, cycloaliphatischen oder aromatischen Isocyanaten, Diisocyanaten oder Polyisocyanaten, und ihren Prepolymeren mit Polyolen oder Polyaminen, gegebenenfalls unter Einwirkung von Katalysatoren wie tertiäre Amine oder Zinnverbindungen,
- mit Säurechloriden von aliphatischen oder aromatischen Carbonsäuren oder Polycarbonsäuren,
- mit Chloroformiaten von Monoalkoholen und Polyolen
- mit Mono- oder Polyanhydriden von niedermolekularen Verbindungen, gegebenenfalls unter katalytischer Einwirkung von tertiären Aminen.

Feste, pulverförmige Di- oder Polyamine sind oberflächendesaktiviert durch Umsetzung mit
- aliphatischen, cycloaliphatischen oder aromatischen Isocyanaten, Diisocyanaten oder Polyisocyanaten, und deren Prepolymere mit Diolen oder Polyolen. Analoge Umsetzungen sind beispielsweise in der EP 171 015 detailliert beschrieben.
- acrylgruppenhaltigen Verbindungen durch eine Michael Addition, im Falle von aromatischen Aminen unter Katalyse durch Säuren.

Feste Di- oder Polyepoxyde sind oberflächendesaktiviert durch Umsetzung mit
- mit Mono- oder Dianhydriden von niedermolekularen Verbindungen, gegebenenfalls unter Einwirkung von tertiären Aminen als Katalysator,
- aliphatischen, cycloaliphatischen oder aromatischen, primären oder sekundären Aminen, Polyaminen, Polyaminoamiden. Für eine vollständige Oberflächendesaktivierung müssen die desaktivierenden Mittel bei der Umsetzung mit den Oberflächengruppen des festen supendierten Vernetzungsmittels b1) bis b4) im Ueberschuss verwendet werden. Der verbleibende Ueberschuss dieser Mittel aber kann nachher mit den Anhydridgruppen oder allenfalls vorhandenen Carboxylgruppen des Polymeren bei der Lagerung oder bei der Heisshärtung unkontrolliert reagieren. Dieser Ueberschuss von acylierenden oder alkylierenden Verbindungen muss durch Umsetzung in eine nichtreaktive Form übergeführt werden.

Zur Inaktivierung dienen im Falle von überschüssigen Isocyanaten, Säurechloriden oder Chloroformiaten, eine stöchiometrische Menge von primären oder sekundären Alkoholen oder Aminen. Primäre aliphatische monofunktionelle Alkohole werden bevorzugt.

Im Falle von überschüssigen Aminen dient dazu eine stöchiometrische Menge von isocyanathaltigen Verbindungen, wobei aliphatische oder cyloaliphatische Mono- und Diisocyanate bevorzugt sind.

Alle diese Komponenten, Reaktionen sowie die zugehörigen analytischen Methoden zur Bestimmung des Ueberschusses der oberflächendesaktivierenden Mittel sind Stand der Technik und dem Fachmann vertraut.

Lagerstabil wird hier ein Gemisch bezeichnet, welches in 48 Stunden bei Raumtemperatur die Anfangsviskosität nicht verdoppelt und während dieser Zeit nicht in den Gelzustand übergeht, gegebenenfalls auch in Anwesenheit von Katalysatoren für die Härtung.

Während die Reaktion zwischen anhydridgruppenhaltigen Polymeren und aminogruppenhaltigen Vernetzungsmitteln oberhalb des Schmelzpunktes des Vernetzungsmittels normalerweise schnell und spontan verläuft, benötigen epoxy- und hydroxylgruppenhaltige Vernetzungsmittel meistens Katalysatoren, um innerhalb nützlicher Zeit vollständig zu reagieren und die gewünschte Endfestigkeit zu erreichen. Vorteilhafte Katalysatoren für epoxy- und hydroxylgruppenhaltige Vernetzungsmittel sind tertiäre Amine oder alkalische Carbonsäuresalze in Mengen bis zu 2 Teilen pro 100 Teile Bindemittel/Vernetzungsmittel.

Beispiele für katalytisch wirksame tertiäre Amine sind Trialkylamine, bevorzugt C12-C14-Alkyldimethylamin, Di-C12-C14-Alkyl-methylamin, N-Alkylimidazole, N,N,N',N'-Tetramethylethlendiamin und -1,3-butandiamin, Diazabicyclo-octan (Dabco) und -undecen (DBU), Verbindungen von DBU und Carbonsäuren oder Phenolen, Tetramethylguanidin, 4-Dimethylaminopyridin, Trimethylpiperazin, N,N'-Dialkylpiperazin, N,N-Dimethylbenzylamin, N-Alkylmorpholin, bis-(N-Dialkylaminoethyl)ether, 2,2-Dimorpholinodiethylether.

Beispiel für ein alkalisches Carbonsäuresalze ist Kaliumoctoat.

Es ist von Vorteil, wenn unvernetzte katalysierte Massen bis zum Gebrauch vor längerem Zutritt von Kohlensäure aus der Umgebungsluft geschützt werden, um die volle Wirksamkeit der Katalysatoren zu erhalten.

Die Eigenschaften der unvernetzten und vernetzten Massen können durch den Fachmann gezielt gesteuert werden und hängen u.a. vom Polymergehalt, von Anhydridgehalt des Polymers, vom Polymerisationsgrad, vom Anteil des Comonomeren, von der Funktionalität, von Verhältnis Säureanhydrid zu funktionellen Gruppen der Vernetzungsmittels, von der Art der funktionellen Gruppen und von Zusatzmitteln ab. Einen grossen Einfluss auf verschiedene Eigenschaften der Massen in flüssigen oder vernetzten Zustand haben verschiedene Zusatzstoffe, ausgewählt aus der Gruppe anorganische und organische Füllstoffe, Pigmente, Metallpulver, Farbstoffe, Russ, pyrogene Kieselsäure, kurzgeschnittene Fasern, Gummipulver, Weichmacher, Extenderöle, Bitumen, Harze, nicht-reaktive Polymere, reaktive Modifizierungsmittel, klebrigmachende Harze, Haftvermittler, Silane, Netzmittel, Silikonöle, flammhemmende Zusätze, Alterungsschutzmittel, Lichtschutzmittel, Korrosionsschutzmittel, Geruchsstoffe, fungistatisch und bakteriostatisch wirksame Stoffe, Thixotropiemittel, Treibmittel und Schaumstabilisatoren, Lösungsmittel und deren Gemische. Die Wirkung dieser zusätze sowie die bevorzugten Konzentrationen sind Stand der Technik und dem Fachmann bekannt. Sie ermöglichen ihm die Verwendung der erfindungsgemässen Massen zur Herstellung von sehr weichen bis harten Massen mit unterschiedlicher Zugfestigkeit, Einreissfestigkeit, Druckverformungsrest, Glasübergangstemperatur und chemischer Beständigkeit. Das Verfahren zur Herstellung der erfindungsgemässen Massen auf Basis von säureanhydridhaltigen Polymeren als Bindemittel und darin dispergierten pulverförmigen Vernetzungsmitteln mit anhydridreaktiven Gruppen besteht im schonenden homogenen Mischen der Komponenten unter Vermeidung von hohen Scherkräften, wobei die Temperatur maximal 55 °C beträgt und somit der Schmelzpunkt des ungelösten, dispergierten Vernetzungsmittels nicht erreicht wird. Bevorzugt wird bei Raumtemperatur gemischt. Nach dem Mischen kann gegebenenfalls eine Zwischenlagerung erfolgen.

Von Vorteil kann auch ein Verfahren sein, die Härtung oder Vernetzung der erfindungsgemässen Massen mit einem Gemisch von zwei Vernetzungsmitteln mit unterschiedlichem Schmelzpunkt, Löslichkeit oder Reaktivität in der Wärme zweistufig durchzuführen. Beispielsweise erfolgt in einer ersten schnellen Reaktion eine Kettenverlängerung, dann in einer nachfolgenden langsameren Reaktion die endgültige Vernetzung.

Bevorzugt ist weiterhin ein Verfahren, das dadurch gekennzeichnet ist, dass man mindestens 2 Vernetzungsmittel verwendet, wobei die Reaktivität der anhydridreaktiven Vernetzungsmittel und ihre Vernetzungsgeschwindigkeit verschieden sind.

Die Verwendung der erfindungsgemässen pulverförmigen Vernetzungsmittel zur Herstellung der vernetzten Massen auf der Basis von säureanhydridgruppenhaltigen Polymeren durch Aushärtung oder Vernetzung der erfindungsgemässen flüssigen Masse erfolgt im Temperaturbereich von 80 bis 250 °C, bevorzugt bei 90 bis 180 °C durch Zuführen von Wärme, Erzeugen von Wärme in der Masse oder im Substrat.

Die erfindungsgemässen Mischungen werden zur Herstellung von Giessmassen, Extrudiermassen, Beschichtungsmasse, Vergussmassen, Klebstoffen und Dichtmassen verwendet.

### Beispiele:

Definitionen: % bedeutet Gewichtsprozent, T Massenteile. Säurezahl: Die Säurezahl wurde mit methanolischer KOH bestimmt. Pro Anhydridgruppe bildet sich eine Säuregruppe und ein Methylester.

Mechanische Prüfungen: Die Reissfestigkeit wurde nach DIN 53 504, der Weiterreisswiderstand nach DIN 53 507 bestimmt. Abzugsgeschwindigkeit 100 mm/Min. Die Eindruckhärte wurde mit dem Shore A-Prüfgerät bestimmt.

### Tabelle 1: Verwendete Materialien:

### Polymere:

Lithene LX16-10MA; Flüssiges, maleinisiertes Polybutadien mit 9.09 % Maleinsäureanhydrid, Säurezahl 54 mg KOH/g,
Mn 8800 (Revertex Ldt. UK-Harlow)
Lithene LX16-5MA; Flüssiges, maleinisiertes Polybutadien mit 4.76 % Maleinsäureanhydrid, Säurezahl 28 mg KOH/g,
Mn 8800, (Revertex Ltd. UK-Harlow)
Lucant A 5560; Flüssiges, mittels Graftreaktionen maleinisiertes EPDM, Mn 2600, Säurezahl 28 mg KOH/g (Mitsui Petrochemical Ind., Japan)

### Weichmacher:

Nyflex 810; Naphthenisches Prozessöl (AB Nynäs Petroleum, S-Nyeshamn)
Vestinol 9; Diisononylphthalat (Hüls AG, D-Marl)
Santicizer 261; Benzyloctylphthalat (Monsanto Europe SA, B-Brüssel)

### Vernetzungsmittel:

Dianol 220; Ethoxyliertes Bisphenol A, (AKZO Chem. Div. NL-Amsterdam)
THEIC; Trishydroxyethylisocyanurat (BASF AG, D-Ludwigshafen) PE-200; Pentaerythrit (Hercules Inc.; USA-Wilmington) HQEE; Hydroquinon-di(2-hydroxyethyl)-ether (Eastman Chemical Prod., INC., USA-Kingsport)
NPG; Neopentylglykol (Eastman Chemical Prod., INC., USA-Kingsport)
Araldit PT 810; Triglycidylisocyanurat, (Ciba-Geigy AG, CH-Basel)
Polacure 740, Trimethylenglykol-di-p-aminobenzosäureester (Air Products, NL-Utrecht)
DABAN; 4,4'-Diaminobenzanilid (Nobel Chemicals, S-Karlskoga)

### Katalysator:

C12-C14-Alkyldimethylamin (BASF AG, D-Ludwigshafen)

### Hilfsmittel:

Phenolisches Alterungsschutzmittel (Vulkanox BKF, Bayer AG, D-Leverkusen)
Desmodur E-23; MDI-Polyetherprepolymer, 15.4 % NCO, Val 273 g, (Bayer AG, D-Leverkusen)

### Füllstoffe:

Kreide, gefällt, oberflächenbehandelt, mittlere Korngrösse 80 nm (Socal U1S1, Solvay B-Brüssel)
Molekularsiebpulver, Typ 4A (Purmol, Chemie Uetikon AG, CH-Uetikon)

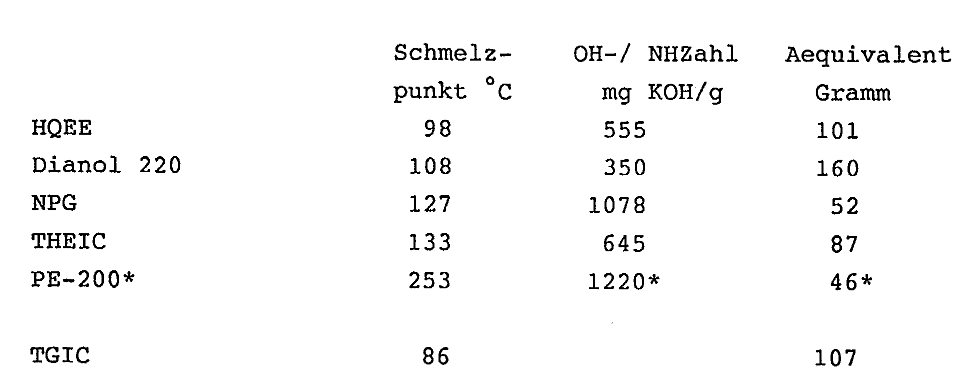

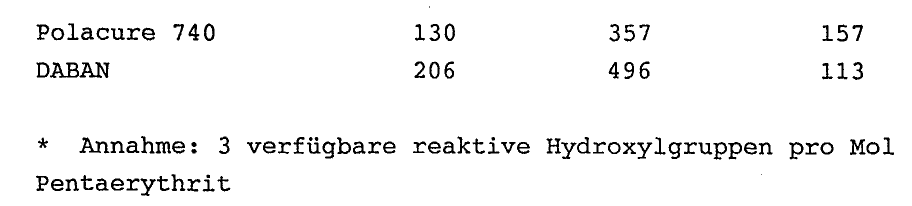

**Tabelle 3:**

| Transparente Formulierungen | | | | | | | | |
|---|---|---|---|---|---|---|---|---|
| Formulierung | | | | | | | | |
| (1) Lithene LX 16-10MA | | | | | | | | 1000 |
| (2) Nyflex 810 | | | | | | | | 428 |
| (3) Tertiäres Amin | | | | | | | | 0.4 |
| (4) Feste Vernetzungsmittel, wie unten angeführt | | | | | | | | |

| Versuch Nr. | 1 | 2 | 3 | 4 | 5 | 6 | 7 | 8 |
|---|---|---|---|---|---|---|---|---|
| Pentaerythrit* | 44 | | | | | | | |
| THEIC | | 81 | | | | | | |
| Dianol 220 | | | 148 | | | | | |
| NPG | | | | 50 | | | | |
| HQEE | | | | | 97 | | | |
| TGIC | | | | | | 103 | | |
| Polacure 740 ** | | | | | | | 151 | |
| DABAN ** | | | | | | | | 108 |
| Lagerstabilität bei Raumtemp., Tage | >30 | >30 | 7 | 3 | 25 | >30 | >30 | >30 |
| Shore A | 50 | 45 | 35 | 32 | 36 | 38 | 57 | 53 |
| (nach stöchiometrischer Vernetzung bei 145 °C während 10 Minuten) | | | | | | | | |

| | | | | | | | | |
|---|---|---|---|---|---|---|---|---|
| * Annahme: 3 Val OH/Mol | | | | | | | | |
| ** Ohne tertiäres Amin | | | | | | | | |

**Tabelle 4:**

| Formulierungen / Resultate | | | | |
|---|---|---|---|---|
| Versuch Nr. | 9 | 10 | 11 | 12 |
| (1) Lithene LX 16-5MA | 1000 | 1000 | | |
| (2) Lithene LX 16-10MA | | | 1000 | 1000 |
| (4) Santicizer 261 | | 658 | 658 | |
| (5) Vestinol 9 | 455 | | | |
| (6) Socal U1S1 | 766 | 766 | 766 | 766 |
| (7) Purmol4A | 23 | 23 | 23 | 23 |
| (8) Vulkanox BKF | 5 | 5 | 5 | 5 |
| (9) Nyflex 810 | 203 | | | 658 |
| (10) PE 200 | 22 | 22 | 44 | |
| (11) HQEE | | | | 97 |
| (12) Tertiäres Amin 10 %ige Lösung in (9) | 4 | 4 | 4 | 4 |
| Total | 2478 | 2478 | 2500 | 2553 |
| | | | | |
| Stabilität bei Raumtemperatur, Tage | > 40 | > 40 | > 40 | > 20 |
| Vernetzungstemp. °C | 145 | 130 | 130 | 120 |
| | | | | |
| Shore A | 38 | 32 | 55 | 52 |
| Reissfestigkeit N/mm2 | 0.84 | *** | 1.36 | 1.44 |
| Reissdehnung % | 55 | *** | 35 | 36 |
| Weiterreisswiderst. N/mm | 0.62 | *** | *** | 0.88 |

| | | | | |
|---|---|---|---|---|
| *** nicht bestimmt | | | | |

**Tabelle 5:**

| Formulierungen / Resultate | | | | |
|---|---|---|---|---|
| Versuch Nr. | 13 | 14 | 15 | 16 |
| (2) Lithene LX 16-5MA | 1000 | 1000 | 1000 | |
| (3) Lithene LX 16-10MA | | | | 1000 |
| (4) Vestinol 9 | 455 | | 455 | 455 |
| (5) Nyflex 810 | | 455 | | |
| (6) Socal U1S1 | 766 | 766 | 766 | 766 |
| (7) Purmol4A | 23 | 23 | 23 | 23 |
| (8) Vulkanox BKF | 5 | 5 | 5 | 5 |
| (9) Nyflex 810 | 203 | 203 | 203 | 203 |
| (10) DABAN <200 µm | 55 | 55 | 55 | |
| (11) Polacure 740 | | | | 150 |
| (12) Desmodur E-23 | | | 13 | |
| (13) Butylglykol | | | 6 | |
| Total | 2507 | 2507 | 2526 | 2602 |
| | | | | |
| Stabilität bei Raumtemperatur, Tage | < 3 | > 40 | > 40 | > 40 |
| Vernetzungstemp. °C | 120 | 135 | 125 | 120 |
| | | | | |
| Shore A | 42 | 39 | 44 | 58 |
| Reissfestigkeit N/mm2 | 1.87 | 1.60 | 1.78 | 2.49 |
| Reissdehnung % | 101 | 93 | 108 | 56 |
| Weiterreisswiderst. N/mm | 1.32 | *** | 1.36 | 1.46 |

| | | | | |
|---|---|---|---|---|
| *** nicht bestimmt | | | | |

Zu Versuch 15 : Stabilisierung des festen Amins mit Isocyanat-prepolymer:

55 g DABAN (4,4'-Diaminobenzanilid, 0.486 Val) wurden in 158 g des naphthenischen Oels Nyflex 810 dispergiert und mit 13 g Desmodur E-23 (ca. 0.049 Val) versetzt. Nach 24 Stunden Reaktionszeit bei Raumtemperatur wurde allenfalls vorhandener Ueberschuss an Isocyanatprepolymer durch Zugabe von 6 g Butylglykol (0.05 Val) zum Urethan umgesetzt. Diese Dispersion von oberflächenstabilisierten DABAN wurde anschliessend mit dem Rest der Formulierung vermischt.

Die Mischung wurde in die vertiefte Nut eines Eimerdeckels aus Weissblech gegeben und während 5 Minuten bei 145 °C im Ofen ausgehärtet. Es resultierte eine kautschukelastische Abdichtungsmasse mit guter Rückstellelastizität.

Der Vergleich der Lagerstabilität von Versuch 15 mit derjenigen des Versuches 13 zeigt die wesentlich höhere Lagerstabilität des oberflächendesaktivierten, festen Vernetzungsmittels im Gemisch mit dem anhydridgruppenhaltigen Polymer bei Raumtemperatur.

**Tabelle 6:**

| Formulierungen / Resultate | | |
|---|---|---|
| Versuch Nr. | 18 | 19 |
| (1) Lithene LX 16-5MA | 1000 | |
| (2) Lucant A 5560 | | 1000 |
| (3) Vestinol 9 | 455 | 455 |
| (4) Socal U1S1 | 766 | 766 |
| (5) Purmol4A | 23 | 23 |
| (6) Vulkanox BKF | 5 | 5 |
| (7) Nyflex 810 | 203 | 203 |
| (8) TGIC PT 810 | 51 | |
| (9) Tertiäres Amin 10 %ige Lösung in (7) | 4 | |
| (10) DABAN <200 µm | | 55 |
| Total | 2507 | 2507 |
| | | |
| Stabilität bei Raumtemperatur, Tage | > 40 | > 40 |
| Vernetzungstemp. °C | 130 | 120 |
| | | |
| Shore A | 25 | 41 |
| Reissfestigkeit N/mm2 | 0.72 | *** |
| Reissdehnung % | 41 | *** |

| | | |
|---|---|---|
| *** nicht bestimmt | | |

## Patentansprüche

1. Flüssige, bei Raumtemperatur lagerstabile, in der Wärme vernetzende Masse auf Basis von säureanhydridgruppenhaltigen Polymeren als Bindemittel, dadurch gekennzeichnet, dass sie mindestens ein in der Masse dispergiertes, pulverförmiges Vernetzungsmittel mit insgesamt mehr als einer anhydridreaktiven Gruppe pro Molekül enthält, welches unter Wärmezufuhr das anhydridgruppenhaltige Bindemittel unter Verfestigung vernetzen kann, wobei die Masse wahlweise Katalysator und Zusatzstoffe enthält.

2. Masse nach Anspruch 1, dadurch gekennzeichnet, dass der Schmelzpunkt der Vernetzungsmittel mindestens 60 °C, bevorzugt mindestens 80 °C, ganz besonders bevorzugt wenigstens 100 °C beträgt.

3. Verfahren nach Anspruch 1 und 2, dadurch gekennzeichnet, dass die Masse Vernetzungsmittel enthält, die das Bindemittel bei Temperaturen bei 80 °C oder höher vernetzen können.

4. Masse nach Anspruch 1 bis 3, dadurch gekennzeichnet, das die Korngrösse der Vernetzungsmittel bis 500 µm beträgt.

5. Masse nach Anspruch 1 bis 4, dadurch gekennzeichnet, dass das Vernetzungsmittel ausgewählt ist aus der Gruppe der Di- oder Polyamine, Di- oder Polyole, Di- oder Polyepoxyde, Verbindungen mit verschiedenen anhydridreaktiven Gruppen oder ihren Gemischen.

6. Masse nach Anspruch 1 bis 5, dadurch gekennzeichnet, dass die Funktionalität des anhydridreaktiven Vernetzungsmittels oder von Gemischen von Vernetzungsmitteln 1.5 bis 6, bevorzugt 2 bis 4 beträgt.

7. Masse nach Anspruch 1 bis 6, dadurch gekennzeichnet, dass sie mindestens 2 Vernetzungsmittel mit unterschiedlichen Reaktivitäten enthält.

8. Masse nach Anspruch 1 bis 7, dadurch gekennzeichnet, dass sie maximal 49 Equivalentprozente eines monofunktionellen anhydridreaktiven Vernetzungsmittels enthält.

9. Masse nach Anspruch 1 bis 8, dadurch gekennzeichnet, dass die anhydridreaktiven Gruppen an der Oberfläche der pulverförmigen Vernetzungsmittel in an sich bekannter Weise desaktiviert sind, wobei bevorzugt 0.1 bis 15 Equivalentprozente der total im Vernetzungsmittel vorhandenen reaktiven Gruppen desaktiviert sind.

10. Masse nach Anspruch 1 bis 9, dadurch gekennzeichnet, dass das Bindemittel ausgewählt ist aus der Gruppe Copolymere von Malein- oder Itaconsäureanhydrid mit olefinisch ungesättigten Monomeren, Additionsprodukte von ungesättigten Anhydriden an Polymere mit einzelnen oder konjugierten Doppelbindungen, Additionsprodukte von ungesättigten Anhydriden an ungesättigte Abbauprodukte von hochmolekularen Naturkautschuken, Styrol-Butadienkautschuken oder thermoplastischen Styrol-Butadien-Isoprenkautschuken, Additionsprodukte, welche erhalten wurden durch radikalische Graftreaktionen von olefinisch ungesättigten Anhydriden an ein flüssiges Polymer, polymere Esteranhydride, Thioesteranhydride oder Amidanhydride von Polyhydroxylverbindungen, Polymercaptoverbindungen, von Polyaminen, mit Trimellitsäureanhydrid, Pyromellitsäuredianhydrid, Benzoltetracarbonsäuredianhydrid, Benzophenontetracarbonsäuredianhydrid, und Gemische dieser Bindemittel.

11. Masse nach Anspruch 10, dadurch gekennzeichnet, dass das Bindemittel ein Addukt ist von Maleinsäureanhydrid an Polymere oder Copolymere des Polybutadiens ist.

12. Masse nach Anspruch 10 oder 11, dadurch gekennzeichnet, dass das Bindemittel mindestens ein Polymer mit einem Molekulargewicht von 500 bis 50 000 ist, das im Mittel 1.5 bis 10, bevorzugt 1.8 bis 8 Anhydridgruppen pro Molekül enthält.

13. Masse nach Anspruch 10 bis 12, dadurch gekennzeichnet, dass das Bindemittel ein Gemisch von polyfunktionellen und monofunktionellen anhydridgruppenhaltigen Polymeren mit einem mittleren Gehalt von wenigstens 1.5 Anhydridgruppen pro Polymermolekül ist.

14. Masse nach Anspruch 1 bis 13, dadurch gekennzeichnet, dass das Verhältnis von anhydridreaktiven Gruppen des Vernetzungsmittels, zu den Säureanhydridgruppen des Bindemittels, im Bereiche von 5 zu 1, bis 0.2 zu 1, bevorzugt zwischen 3 zu 1 und 0.3 zu 1 liegt.

15. Masse nach Anspruch 1 bis 14, dadurch gekennzeichnet, dass das Bindemittel neben Anhydridgruppen noch andere funktionelle Gruppen enthält.

16. Masse nach Anspruch 1 bis 15, dadurch gekennzeichnet, dass die Masse bezogen auf 100 Massenteile Binde- und Vernetzungsmittel bis 2 Massenteile mindestens eines Katalysators, bevorzugt aus der Gruppe tertiäres Amin oder alkalisches Carbonsäuresalz, enthält.

17. Masse nach Anspruch 1 bis 16, dadurch gekennzeichnet, dass sie Zusatzstoffe aus der Gruppe anorganische und organische Füllstoffe, Pigmente, Metallpulver, Farbstoffe, Russ, pyrogene Kieselsäure, kurzgeschnittene Fasern, Gummipulver, Weichmacher, Extenderöle, Bitumen, Harze, nicht-reaktive Polymere, reaktive Modifizierungsmittel, klebrigmachende Harze, Haftvermittler, Silane, Netzmittel, Silikonöle, flammhemmende Zusätze, Alterungsschutzmittel, Lichtschutzmittel, Korrosionsschutzmittel, Geruchsstoffe, fungistatisch und bakteriostatisch wirksame Stoffe, Thixotropiemittel, Treibmittel und Schaumstabilisatoren, Lösungsmittel, und deren Gemische enthält.

18. Verfahren zur Herstellung von Massen gemäss den Ansprüchen 1 bis 17, dadurch gekennzeichnet, dass man die Bestandteile bei Temperaturen bis maximal 55 °C homogen vermischt und gegebenenfalls zwischenlagert.

19. Verfahren gemäss dem Anspruch 18, dadurch gekennzeichnet, dass man mindestens 2 Vernetzungsmittel verwendet, wobei die Reaktivität der anhydridreaktiven Vernetzungsmittel und ihre Vernetzungsgeschwindigkeit verschieden sind.

20. Verwendung von pulverförmigen, anhydridreaktiven Vernetzungsmitteln zur Herstellung von lagerstabilen, in der Wärme vernetzenden Massen auf Basis von säureanhydridgruppenhaltigen flüssigen Polymeren nach den Ansprüchen 1 bis 16, die diese Vernetzungsmittel enthalten, welche unter Wärmezufuhr zum Schmelzen oder Lösen gebracht werden und unter weiterer Wärmezufuhr bei Temperaturen von 80 bis 250 °C, bevorzugt 90 bis 180 °C, die säureanhydridhaltigen Polymeren vernetzen.

21. Verwendung der Massen gemäss den Ansprüchen 1 bis 17 zur Herstellung von Giessmassen, Extrusionsmassen, Beschichtungsmassen, Vergussmassen, Klebmassen und Dichtmassen.

## Claims

1. Liquid composition which is stable on storage at room temperature and crosslinks under the action of heat and which is based on polymers as a binder, said polymers containing acid anhydride groups, characterized in that the composition contains at least one powder-form crosslinker having more than one anhydride-reactive group per molecule and being dispersed in said composition, and on application of heat the crosslinker is able to crosslink the binder containing the anhydride groups, with solidification, the composition optionally containing catalyst and additives.

2. Composition according to claim 1, characterized in that the melting point of the crosslinkers is at least 60°C, preferably at least 80°C, and most preferably at least 100°C.

3. Composition according to claim 1 and 2, characterized in that the composition contains crosslinkers which are able to crosslink the binder at temperatures of 80°C or more.

4. Composition according to claim 1 to 3, characterized in that the particle size of the crosslinkers is up to 500 µm.

5. Composition according to claim 1 to 4, characterized in that the crosslinker is selected from the group consisting of the di- or polyamines, di- or polyols, di-or polyepoxides, compounds with different anhydride-reactive groups or mixtures thereof.

6. Composition according to claim 1 to 5, characterized in that the functionality of the anhydride-reactive crosslinker or of mixtures of crosslinkers amounts to 1.5 to 6, preferably 2 to 4.

7. Composition according to claim 1 to 6, characterized in that it contains at least 2 crosslinkers with different reactivities.

8. Composition according to claim 1 to 7, characterized in that it contains a maximum of 49 equivalent percent of a monofunctional anhydride-reactive crosslinker.

9. Composition according to claim 1 to 8, characterized in that the anhydride-reactive groups on the surface of the powder-form crosslinker are inactivated in a manner known per se, with preferably 0.1 to 15 equivalent percent of the reactive groups present in total in the crosslinker being inactivated.

10. Composition according to claim 1 to 9, characterized in that the binder is selected from the group consisting of copolymers of maleic anhydride or itaconic anhydride with olefinically unsaturated monomers, addition products of unsaturated anhydrides onto polymers with individual or conjugated double bonds,
addition products of unsaturated anhydrides onto unsaturated decomposition products of high molecular weight natural rubbers, styrene-butadiene rubbers or thermoplastic styrene-butadiene-isoprene rubbers, addition products which have been obtained by free-radical graft reactions of olefinically unsaturated anhydrides onto a liquid polymer,
polymeric ester anhydrides, thioester anhydrides or amide anhydrides of polyhydroxyl compounds,
polymercapto compounds, of polyamines, with trimellitic anhydride, pyromellitic dianhydride, benzenetetracarboxylic dianhydride, benzophenonetetracarboxylic dianhydride, and mixtures of these binders.

11. Composition according to claim 10, characterized in that the binder is an adduct of maleic anhydride onto polymers or copolymers of polybutadiene.

12. Composition according to claim 10 or 11, characterized in that the binder is at least one polymer with a molecular weight of 500 to 50 000 which contains on average 1.5 to 10, preferably 1.8 to 8 anhydride groups per molecule.

13. Composition according to claim 10 to 12, characterized in that the binder is a mixture of polyfunctional and monofunctional polymers containing anhydride groups with an average content of at least 1.5 anhydride groups per polymer molecule.

14. Composition according to claim 1 to 13, characterized in that the proportion of anhydride-reactive groups of the crosslinker to the acid anhydride groups of the binder is in the region from 5 to 1 to 0.2 to 1, preferably between 3 to 1 and 0.3 to 1.

15. Composition according to claim 1 to 14, characterized in that the binder contains other functional groups in addition to anhydride groups.

16. Composition according to claim 1 to 15, characterized in that the composition, in relation to 100 parts by mass of binder and crosslinker, contains up to 2 parts by mass of at least one catalyst, preferably from the group consisting of tertiary amine or alkaline carboxylic acid salt.

17. Composition according to claim 1 to 16, characterized in that it contains additives from the group consisting of inorganic and organic fillers, pigments, metal powders, dyes, carbon black, pyrogenic silica, short chopped fibres, rubber powder, plasticizers, extender oils, bitumen, resins, non-reactive polymers, reactive modifiers, tackifying resins, adhesion promoters, silanes, surfactants, silicone oils, flame-retarding additives, anti-ageing products, light stabilisers, anticorrosion agents, scents, fungistatic and bacteriostatic agents, thixotropic agents, blowing agents and foam stabilisers, solvents, and mixtures thereof.

18. Method of manufacture of compositions according to claims 1 to 17, characterized in that the components are homogeneously mixed at temperatures up to a maximum of 55°C and if desired are placed in intermediate storage.

19. Method according to claim 18, characterized in that at least 2 crosslinkers are used, the reactivity of the anhydride-reactive crosslinkers and their crosslinking rate being different.

20. Use of powder-form, anhydride-reactive crosslinkers for the manufacture of storage-stable compositions which crosslink under the action of heat and which are based on liquid polymers containing acid anhydride groups according to claims 1 to 16 which contain these crosslinkers, said crosslinkers being melted or dissolved through the application of heat and, with further application of heat, crosslink the polymers containing acid anhydride at temperatures from 80 to 250°C, preferably 90 to 180°C.

21. Use of the compositions according to claims 1 to 17 for the manufacture of casting compounds, extrusion compounds, coating compositions, casting compounds, adhesives and sealants.

## Revendications

1. Matière réticulable à la chaleur, stable au stockage à la température ambiante, liquide, à base de polymères contenant des groupes anhydride d'acide comme liant, caractérisée en ce qu'elle contient au moins un agent réticulant pulvérulent, dispersé dans la matière avec en tout plus d'un groupe réactif vis-à-vis des anhydrides par molécule, lequel peut réticuler avec durcissement le liant contenant des groupes anhydride sous apport de chaleur, la matière contenant optionnellement des catalyseurs et des adjuvants.

2. Matière selon la revendication 1, caractérisée en ce que le point de fusion des agents réticulants est au moins de 60°C, de préférence au moins de 80°C, de façon particulièrement préférée d'au moins 100°C.

3. Procédé selon la revendication 1 et 2, caractérisé en ce que la matière contient des agents réticulants qui peuvent réticuler le liant à des températures de 80°C ou supérieures.

4. Matière selon la revendication 1 à 3, caractérisée en ce que la granulométrie des agents réticulants peut atteindre 500 µm.

5. Matière selon la revendication 1 à 4, caractérisée en ce que l'agent réticulant est choisi dans le groupe des di- ou polyamines, di- ou polyols, di- ou polyépoxydes des composés avec des groupes réactifs vis-à-vis des anhydrides, différents ou leurs mélanges.

6. Matière selon la revendication 1 à 5, caractérisée en ce que la fonctionnalité de l'agent réticulant réactif vis-à-vis des anhydrides ou des mélanges d'agents réticulants est de 1,5 à 6, de préférence de 2 à 4.

7. Matière selon la revendication 1 à 6, caractérisée en ce qu'elle contient au moins deux agents réticulants avec des réactivités différentes.

8. Matière selon la revendication 1 à 7, caractérisée en ce qu'elle contient au maximum 49 % d'équivalent d'un agent réticulant réactif vis-à-vis des anhydrides, monofonctionnel.

9. Matière selon la revendication 1 à 8, caractérisée en ce que les groupes réactifs vis-à-vis des anhydrides à la surface des agents réticulants pulvérulents sont désactivés de manière connue en soi, de préférence 0,1 à 15 % d'équivalent du total des groupes réactifs présents dans l'agent réticulant étant désactivés.

10. Matière selon la revendication 1 à 9, caractérisée en ce que le liant est choisi dans le groupe des copolymères d'anhydride d'acide maléique ou itaconique avec des monomères oléfiniquement insaturés, des produits d'addition d'anhydrides insaturés sur des polymères présentant des doubles liaisons individuelles ou conjuguées, des produits d'addition d'anhydrides insaturés sur des produits de dégradation de caoutchoucs naturels de haut poids moléculaire, de caoutchoucs de styrène-butadiène ou de caoutchoucs de styrène-butadiène-isoprène thermoplastiques, des produits d'addition qui ont été obtenus par des réactions de greffage radicalaire d'anhydrides oléfiniquement insaturés sur un polymère liquide, des esters-anhydrides polymères, des thioesters-anhydrides ou des amides-anhydrides de composés polyhydroxylés, de composés polymercapto, de polyamines, avec l'anhydride de l'acide trimellitique, le dianhydride de l'acide pyromellitique, le dianhydride de l'acide benzènetétracarboxylique, le dianhydride de l'acide benzophénonetétracarboxylique, et des mélanges de ces liants.

11. Matière selon la revendication 10, caractérisée en ce que le liant est un composé d'addition de l'anhydride maléique sur des polymères ou des copolymères du polybutadiène.

12. Matière selon la revendication 10 ou 11, caractérisée en ce que le liant est au moins un polymère ayant une masse molaire de 500 à 50 000 qui contient en moyenne 1,5 à 10, de préférence 5,8 à 8 groupes anhydride par molécule.

13. Matière selon la revendication 10 à 12, caractérisée en ce que le liant est un mélange de polymères contenant des groupes anhydride, polyfonctionnels et monofonctionnels, ayant une teneur moyenne d'au moins 1,5 groupe anhydride par molécule de polymère.

14. Matière selon la revendication 1 à 13, caractérisée en ce que la proportion de groupes réactifs vis-à-vis des anhydrides de l'agent réticulant aux groupes anhydride d'acide du liant est dans le domaine de 5 à 1 jusqu'à 0,2 à 1, de préférence entre 3 à 1 et 0,3 à 1.

15. Matière selon la revendication 1 à 14, caractérisée en ce que le liant contient, outre les groupes anhydride, encore d'autres groupes fonctionnels.

16. Matière selon la revendication 1 à 15, caractérisée en ce que la matière contient, pour 100 parties en masse de liant et de réticulant, jusqu'à 2 parties en masse d'au moins un catalyseur, de préférence du groupe amine tertiaire ou sel alcalin d'acide carboxylique.

17. Matière selon la revendication 1 à 16, caractérisée en ce qu'elle contient des adjuvants du groupe des charges non organiques et organiques, des pigments, des poudres de métaux, des colorants, du noir de carbone, de l'acide silicique pyrogène, des fibres découpées courtes, des poudres de gomme, des plastifiants, des huiles de dilution, des bitumes, des résines, des polymères non réactifs, des agents modifiants réactifs, des résines à effet collant, des agents d'adhésion, des silanes, des agents mouillants, des huiles de silicone, des adjuvants ignifuges, des agents de protection contre le vieillissement, des agents de protection contre la lumière, des agents de protection contre la corrosion, des substances aromatiques, des matières à activité fongistatique et bactériostatique, des agents de thixotropie, des agents propulseurs ou moussants et des stabilisants de mousse, des solvants, et de leurs mélanges.

18. Procédé de préparation de matières selon les revendications 1 à 17, caractérisé en ce qu'on mélange les constituants de façon homogène à des températures allant jusqu'à 50°C maximum et en ce qu'on les stocke éventuellement de façon intermédiaire.

19. Procédé selon la revendication 18, caractérisé en ce qu'on utilise au moins deux agents réticulants, la réactivité des agents réticulants réactifs vis-à-vis des anhydrides et leur vitesse de réticulation étant différentes.

20. Utilisation d'agents réticulants réactifs vis-à-vis des anhydrides, pulvérulents, pour la préparation de matières réticulant à la chaleur, stables au stockage, à base de polymères liquides contenant des groupes anhydride d'acide selon les revendications 1 à 16, qui contiennent ces agents réticulants, lesquels, sous apport de chaleur, sont amenés à fondre ou se dissoudre et sous apport supplémentaire de chaleur à des températures de 80 à 250°C, de préférence de 90 à 180°C, réticulent les polymères contenant des anhydrides d'acide.

21. Utilisation des matières selon les revendications 1 à 17 pour la préparation de matières de coulée, de matières d'extrusion, de matières de revêtement, de matières de scellement, de matières collantes et de matières d'étanchéification.
